# EUROPEAN PATENT APPLICATION

(11) **EP 0 818 404 A1**
(43) Date of publication of application: **14.01.1998**
(21) Application number: 97202160.4
(22) Date of filing: 11.07.1997
(51) Int. Cl.: B65G 15/02, B65G 23/14

(54) **Belt conveyor**

(30) Priority: 11.07.1996 NL 1003559
(71) Applicant: Machinefabriek Compas B.V., 1625 NV Hoorn (NL)
(72) Inventor: Koster, Simon, 1607 HE Hem (NL); Abet, Hans-Günter, 8162 EL Epe (NL)
(74) Representative: Bartelds, Erik

(57) **Abstract**

The invention relates to a belt conveyor comprising a frame having a plurality of end rollers rotatably journalled there in an endless belt arranged around the end rollers and means for driving the belt. The belt drive means comprise a drive cord cooperating with an edge of the belt.

The frame and the edge of the belt may comprise cooperating guide means, the drive cord in that case being connected to the edge through the guide means.

The guide means may comprise rotatable guide members embolied as rollers having an engagement surface for the drive cord arranged at their circumference.

## Description

The invention relates to a belt conveyor comprising a frame, at least two end rollers rotatably journalled in the frame, an endless belt arranged around the end rollers and means for driving the belt. Such a belt conveyor is generally known.

The known belt conveyor may have various shapes. Straight-line belt conveyors are of course widely used, but also known are belt conveyors with which transport may take place along a curve, the so called curved conveyors. Various systems are in use for driving such conveyors. The simplest drive system uses a driven end roller which drives the belt through the friction between the end roller and the lower surface of the belt. Such a drive system is satisfactory in case of straight-line conveyors, but is more difficult to realize for a curved conveyor. When a driven end roller is used in a curved conveyor, this roller must be conically shaped, as the outer part of the belt must be driven at a higher speed than the inner part thereof. This conical drive roller is then specific for a single given width of the belt conveyor and a single given radius of curvature. This means that the cost of manufacture and cost of stocks are relatively high when supplying various types of belt conveyors having conical drive rollers.

A drive system that is thus much used in curved conveyors consists of a chain which is connected to the outer edge of the conveyor belt and is guided along driven sprockets. A drawback of this system is that the chain and the belt must be very accurately tuned in to each other, and that in practice this tuning is lost after some time due to dissimilar wear of the belt and chain.

The invention therefore has for its object to provide a belt conveyor of the type described above comprising a drive system with which the above drawbacks are obviated. In accordance with the invention, this is accomplished in that the drive means comprise at least one drive cord connected to the edge of the belt. By using a drive along the edge of the belt, there is no need for using special end rollers configured as drive rollers, so that the need for conical rollers in the case of a curved conveyor is also obviated. Furthermore, when compared to a chain, a drive cord has the advantage that its dimensioning is less critical, since the driving movement of a drive cord by a pulley is continuous rather than stepwise per link as in a chain drive. Thus, shifting of the cord may be easily accommodated.

Preferred embodiments of the belt conveyor of the invention are described in the dependent claims.

The invention is now illustrated on the basis of an exemplary embodiment, with reference being made to the annexed drawing, in which:

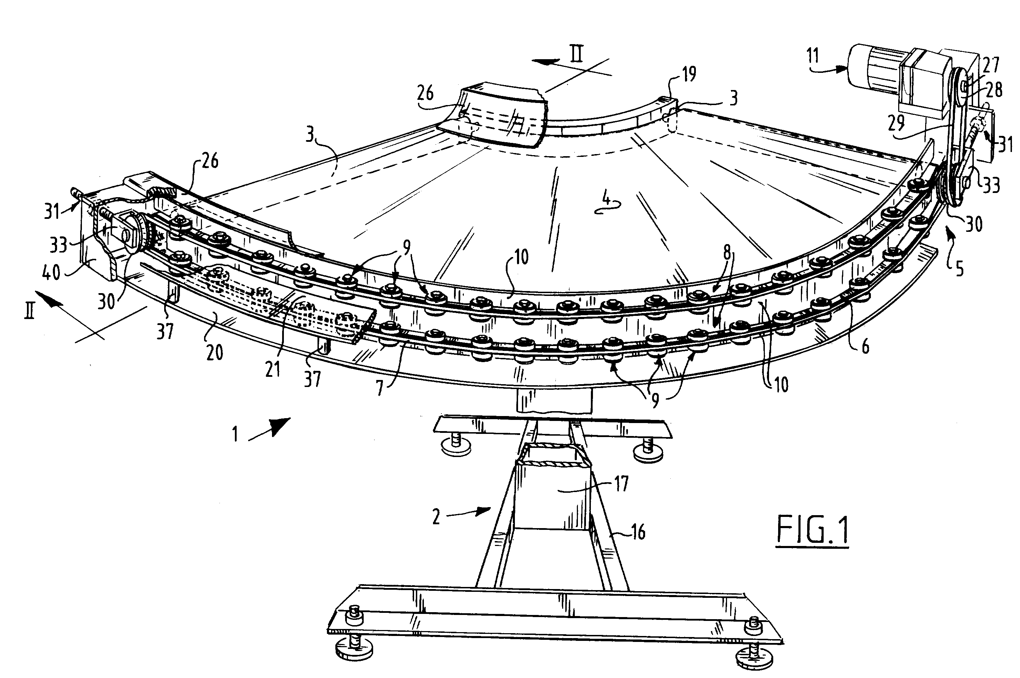

fig. 1 is a partly broken away perspective view of a belt conveyor in accordance with an embodiment of the invention, and

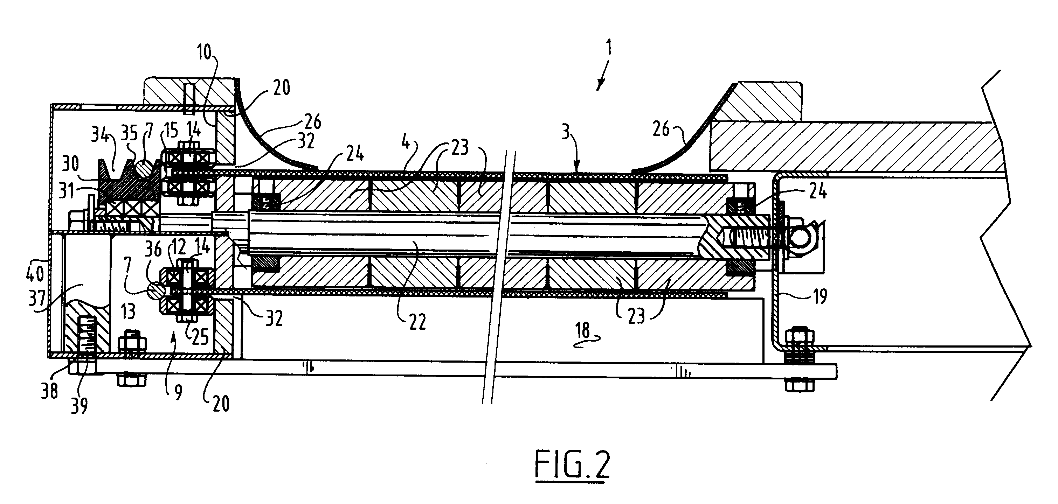

fig. 2 is a cross-section through this belt conveyor along the line II-II in fig. 1.

A belt conveyor 1 in accordance with the present invention comprises a frame 2 consisting of a base part 16, an upright 17 centrally arranged thereon and a support frame carried by the upright (not shown here). In the illustrated embodiment the support frame comprises three radially directed sections arranged at equal angular spacing, which together define an annular segment. The sections are directly connected together at their insides directed at the center of the annulus, whereas their outwardly directed sides are connected by a circle segment shaped connecting part 21, which in cross-section has a lying T-shape.

On both sides of the lying T-section part 21 circle segment shaped cover parts having an L-shaped cross-section are arranged. To this end, spacers 37 having threaded apertures 38 are arranged with regular spacing on both sides of the leg of the lying T-section. When the L-shaped cover sections 20 are attached to the lying T-section 21 by means of screws 39 in the apertures 38, a slit-shaped space 32 is left clear between the short leg of the "L" and the cross of the "T", the function of which will be discussed later. In order that the parts of the drive system discussed below, which are to be arranged between the sections 20 and 21 be protected from surrounding dirt, a cover strip 40 is arranged between the two sections 20. Furthermore, a U-shaped inner section 19 is attached to the mutually connected inner ends of the sections of the support frame.

At each end of the sections 19 and 21 an end roller is 3 is arranged, consisting of a fixed shaft 22 attached between the sections 19, 21 and a plurality of separate roller bodies 23 arranged next to each other and rotatable around the shaft. The roller bodies 23, which may be made from a plastic having a low friction coefficient, can thus rotate at different speeds, whereby variations in the speed of the belt 4 over the width of the curve may be accommodated. An endless belt 4 is arranged around these two end rollers 3. Support rollers (not shown here) may be arranged between the end rollers for supporting at least the conveying part of the belt 4. It is also possible to arrange a support plate under the conveying part of the belt 4 between the two end rollers 3. In order to keep the belt 4 clean a scraper member 18 may be suspended between the sections 19 and 21 under one of the end rollers 3.

The belt conveyor 1 further comprises means 5 for driving the belt 4, said drive means in the illustrated embodiment comprising a motor 11 which on its drive shaft 27 is provided with a pulley 28 around which a cord 29 is guided. This cord 29 is further guided over a first groove 34 of a second pulley 30, which is embodied as double pulley and is journalled in a yoke 33 of a tensioning mechanism 31 connected to the frame 2. As mentioned before, this pulley 30 is a double pulley, and in the second groove 35 of the pulley 30 a drive cord 7 is arranged, which serves for actually driving the belt 4. To this end the drive cord 7 cooperates with an edge, in this case the outer edge 6 of the belt 4.

In fact, the conveyor 1 is provided with guide means 8 at the outer edge 6 of the belt 4, which serve for guiding the outer edge 6 of the belt 4, and at the same time for keeping under tension the belt 4, which tends to creep towards the imaginary center of the curve during transport. These guide means 8 include a plurality of rotatable guide members 9, which are connected to the edge 6 of the belt 4, and a guide track 10 that is connected to the frame 2 of the belt conveyor 1 and along which the guide members 9 are moveable. This guide track 10 is constituted by the outwardly facing surface of the cross of the lying T-section 21. The outer edge 6 of the belt 4 is pulled through the slits 32 between the L-shaped cover sections 20 and the lying T-section 21. The guide members 9 are embodied as rollers 12 which are rotatable parallel to the plane of the belt 4 around shafts 14 extending through apertures 25 in the edge 6 of the belt 4.

Driving of the belt 4 is now performed by the drive cord 7 through the guide rollers 12. The drive cord 7 engages a part of the rollers 12 opposite the guide track 10. To that end, the guide rollers 12 comprise an engagement surface 13 that has been at least partially roughened. Thus, when the drive cord 7 driven by the motor 11 runs along the guide rollers 12, these guide rollers will be rotatably driven through the friction between the drive cord and the engagement surface 13, so that they in fact unroll along the guide track 10, taking along the outer edge 6 of the belt 4. Furthermore, the guide rollers 12 will hardly have any slip, due to their roughened engagement surfaces, so that the efficiency of the drive system is very high. Thus a simple and reliable drive system for the belt 4 is achieved, having no tune-in problems, and not requiring any specially formed end rollers. In principle, the parts to be used are independent of the dimensions of the belt conveyor and of the radius of the curve defined by the conveyor 1.

In order to divide the loads on the guide rollers 12, and to reduce as much as possible the risk of the rollers jamming, the rollers 12 are each arranged in pairs, in the illustrated embodiment on both sides of the belt 4, the two rollers 12 of each pair being driven by the single drive cord 7. The rollers 12 each have a chamfered edge 36, the two chamfered edges 36 of the two rollers 12 together defining a groove 15 for accommodating the drive cord 7. It should further be noted that the drive cord 7 is guided through a double pulley 30 on both sides of the belt conveyor 1. In this way the motor 11 may be mounted at one of the ends of the conveyor 1 as required.

Although the invention has been described here in relation to a drive cord having a round cross-section, the skilled person will appreciate that drive cords having a different cross-sectional shape may in principle be envisaged for use. It is also possible to use more or less guide rollers than shown and described here, and to use guide rollers having other configurations than shown. Furthermore, the drive system by means of a cord as shown and described above is not limited to use for curved conveyors, but could also be used for straight-line or otherwise configured conveyors.

## Claims

1. Belt conveyor (1) comprising a frame (2), at least two end rollers (3) rotatably journalled in the frame (2), an endless belt (4) arranged around the end rollers (3) and means (5) for driving the belt (4), **characterized in that** the belt drive means (5) comprise at least one drive cord (7) cooperating with an edge (6) of the belt.

2. Belt conveyor (1) as claimed in claim 1, **characterized in that** the frame (2) and at least one edge (6) of the belt comprise cooperating guide means (8), and the drive cord (7) is connected to the edge (6) of the belt (4) through the guide means (8).

3. Belt conveyor (1) as claimed in claim 2, **characterized in that** the guide means (8) comprise rotatable guide members (9) connected to the edge (6) of the belt (4) and a guide track (10) for the rotatable guide members (9) connected to the frame (2), and the drive cord (7) engages a part of each of the rotatable guide members (9) that is spaced from the guide track (10).

4. Belt conveyor (1) as claimed in claim 3, **characterized in that** the rotatable guide members (9) comprise rollers (12) rotatable parallel to the plane of the belt (4) and having an engagement surface (13) for the drive cord arranged at their circumference.

5. Belt conveyor (1) as claimed in claim 4, **characterized in that** the rollers (12) are journalled in pairs on shafts (14) extending through the belt (4), and the rollers (12) of each pair comprise cooperating circumferential grooves (15) for accommodating the drive cord (7).

6. Belt conveyor (1) as claimed in claim 5, **characterized in that** at least the circumferential grooves (15) of the rollers (12) have a roughened surface.

7. Belt conveyor (1) as claimed in any one of claims 2 to 6, **characterized in that** the end rollers (3) contain an angle (α) and the belt (4) describes a curve therebetween, and the guide members (9) are arranged at the outer edge (6) of the belt (4).
